# EUROPEAN PATENT APPLICATION

(11) **EP 2 384 001 A1**
(43) Date of publication of application: **02.11.2011**
(21) Application number: 10305454.0
(22) Date of filing: 29.04.2010
(51) Int. Cl.: H04N 7/26, H04N 7/36

(54) **Providing of encoded video applications in a network environment**

(71) Applicant: Alcatel Lucent, 75008 Paris (FR)
(72) Inventor: Fischer, Philippe, 94520, Mandres les Roses (FR); de Vleeschauwer, Danny, 9940, Evergem (BE)
(74) Representative: ALU Antw Patent Attorneys

(57) **Abstract**

A method for providing an encoded video application (3D APP; 2DAPP) from a server (SERVER) to a respective client (CLIENT1,...,CLIENTN) user via a communications link, comprises steps of updating scenes pertaining to said video application (3DAPP; 2DAPP) at said server (SERVER), deriving therefrom a respective video stream (2Dvideo1,...2DvideoN) comprising a succession of respective 2D user-related viewpoints for said respective client (CLIENT1,...,CLIENTN), calculating at least one respective compression related parameter (ep2D_1,...,ep2D_N) from application object vertex information extracted from a subset of successive ones of said scenes pertaining to said video application (3DAPP; 2DAPP) at said server, using said respective compression related parameter (ep2D_1,...,ep2D_N) during subsequent encoding of said respective video stream (2Dvideo1,...2DvideoN), for thereby generating a respective encoded video stream (encoded2D video_1,...,encoded2DvideoN) for provision to said respective client user (CLIENT1,...,CLIENTN). A server adapted to perform this method is disclosed as well

## Description

The present invention relates to a method for providing of an encoded video application from a server to a client user via a communications link.

Networked server-based video applications, such as application streaming or cloud gaming, received recent attention. Therein one or more server based applications such as video games are hosted on a server in an applications network, the server being coupled via a communications link to the users. This communications link may comprise a bi-directional link, with a same physical upstream and downstream path but may also comprise an upstream and downstream link which can be different from each other, such that the real physical path for transmitting information in the upstream direction can differ from the path for transmitting information in the downstream direction. Yet both upstream and downstream data transmission between client and server can be considered as pertaining to a same virtual bi-directional transmission link.

Over the upstream link user upstream information such as keyboard, joystick, mouse, speech, etc input is transferred from each user to this server, which based on this input can calculate a next state yielding an associated updated scene. In other applications the server is adapted to calculate updates based upon the application itself, thus even without explicitly requiring user inputs.

The updated visual information may further need adaptation to each of the user's viewpoints e.g., the updated scene may need to be projected on the user's 2-dimensional (hereafter abbreviated as 2D) viewpoint plane, especially in case of 3-dimensional, hereafter abbreviated by 3D, applications, and consequently has to be transmitted back to these individual users enabling them to continue gaming or to continue interacting with their application. As this concerns video information which needs to be transmitted over the downstream part of the communication link back to the user, this video information is to be compressed as otherwise bandwidth constraints can not be met. To this purpose standard video compression protocols as MPEG2, H264, or the like may be used. After this encoding step the user-specific encoded video data is transmitted back over this communications link to the user. At the user's site the received encoded video information is to be rendered to a display of e.g. a laptop, a smart phone, a game console, a TV, etc. This rendering is usually performed by means of standard decoders.

A drawback of this procedure is related to the heavy processing associated to the encoding of each user's viewpoint video sequence. This has to be performed by the server, for each connected user individually, as each user has its own view on the video game or application. Therefore this user-specific viewpoint sequence encoding is very processing intensive. In some situations this can even lead to unacceptable delays as a consequence of the analysis and computation of the multimedia information to be encoded .

It is thus an object of embodiments of the present invention to provide a method for providing an encoded video application from a server to a respective user, which method requires less computation effort, and thus leads to less delay between server and client user.

According to embodiments of the present invention this object is achieved by the method including the steps of updating scenes pertaining to said video application at said server, deriving therefrom a respective video stream comprising a succession of respective 2D user-related viewpoints for said respective client calculating at least one respective compression related parameter from application object vertex information extracted from a subset of successive ones of said scenes pertaining to said video application at said server, using said respective compression related parameter during subsequent encoding of said respective video stream, for thereby generating a respective encoded video stream for provision to said respective client user.

In this way important vertex information which is inherently available in successive scenes or a subset thereof at the central server application, is now used during the calculation of the compression related parameters such as e.g. motion vectors, which are subsequently used during encoding of the 2D user related viewpoints. Similar considerations hold for the predictions of the block modes e.g. relating to a prediction on whether blocks are most efficiently encoded in I-, P- or B- mode, and other parameters which are inherent to the compression itself.

These compression related parameters as motion vectors, block mode predictions can thus be extracted from 3D or 2D scene information centrally available at the server application. They can be used in simple encoders such as the ones disclosed in the not yet published European Patent application nr 09290985.2, filed by the same Applicant, instead of using traditional encoders for each of the respective video streams for each user. A lot of compression processing and latency are thus spared because information received e.g. through a multimedia API from the application contains native data useable to directly generate the compressed signal. As opposed to the standard MPEG encoders which analyze multiple successive 2D video frames in order to detect matching image blocks from which a motion vector is derived, embodiments of the present method directly obtain this motion vector from the 3D or 2D scenes itself, and this compression parameter then only needs to be adapted to each user's 2D viewpoint by e.g. a suitable 2D projection of the 3D motion vector to the particular user's viewpoint in case of 3D scenes and a motion vector as compression related parameter. Therefore usual latency (10 up to 100ms) coming from distinct generation and compression steps is avoided. In additional also a better compression ratio is achieved because the 3D or 2D central scene analysis allows a more precise knowledge of movement.

Similar considerations apply with respect to the other compression related parameters.

The total cost of the cloud applications computing, cloud gaming, etc. will thus also decrease as a consequence of the reduction in processing.

Further features are set out in the appended claims.

The present invention relates as well to a server adapted to perform such a method .

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

It is also to be noticed that throughout the whole of this document 3D is used as abbreviation of three-dimensional. Similarly 2D is used as abbreviation of two-dimensional .

The above and other objects and features of the invention will become more apparent and the invention itself will be best understood by referring to the following description of an embodiment taken in conjunction with the accompanying drawings wherein
Figs. 1a-b show a networked environment wherein a server on which a 3D, resp 2D video application is running, is coupled to several client users interacting via this video application on the server,
Figs. 2a-b schematically show how a central application scene is adapted to a user-specific viewpoint, for the case of 3D, resp 2D scenes,
Fig. 3 schematically shows the steps used for generating and encoding the user-specific viewpoint sequences for the prior art situation for a 3D central application,
Figs. 4a-b schematically show embodiments of the method for providing encoded user-specific viewpoint sequences for 3D, resp 2D central video applications,
Figs. 5a-b show more detailed implementations for the embodiments of Figs. 4a-b,
Fig. 6 shows a variant embodiment of the embodiment shown in Fig. 5a,
Figs. 7a-b show a embodiments of server according to the invention.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

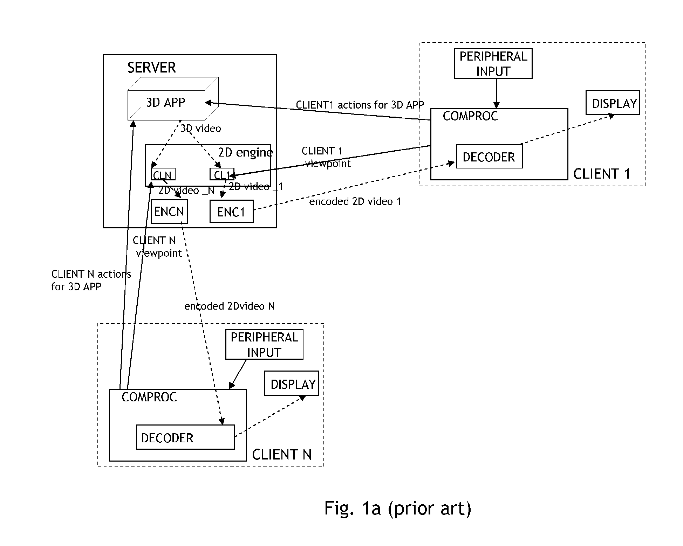

Embodiments of the present invention are used in conjunction with video applications running on a network server, which are to be provided to users in a compressed form, and in accordance to a respective user-related viewpoint. A schematic overview of the network topology is shown in Figs. 1a-b.

Most of such server residing video applications, which may comprise office applications e.g. virtual collaboration environments, games, etc. use standard Application Program Interfaces such as OpenGL, Direct X, etc. to drive the generation of multimedia including video & audio digital signals. In Fig. 1a several users, denoted by Client 1 to Client N, collaborate e.g., play a game in a virtual 3D world that is maintained on a computer server, denoted "SERVER" somewhere in the cloud or service network and coupled to these users via a connection which can be any type of connection via any kind of network being mobile, fixed, satellite,...In order not to overload the drawings this network is not drawn in these figures 1a-b.

In Figs. 1a-b these users are shown as comprising a communications and processing unit, denoted COMPROC. However other client embodiments may not have such a dedicated communication and processing module.

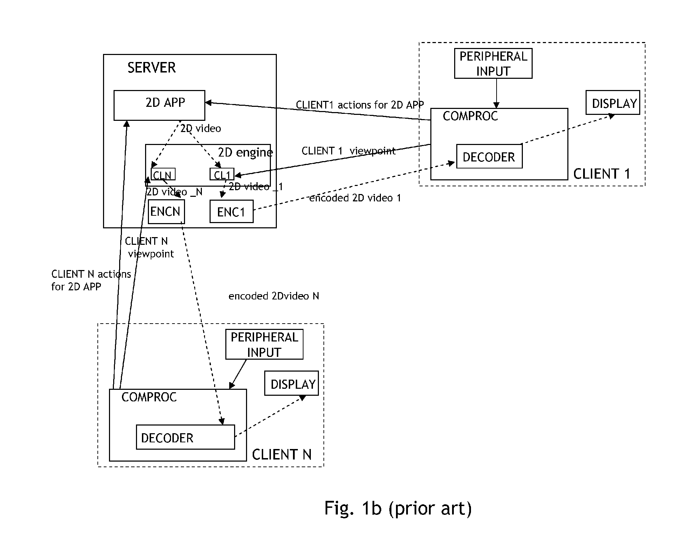

In the embodiments of Figs. 1a-b this communications and processing unit COMPROC further comprises a decoder, coupled to a client display. The user or client devices further comprise peripheral input devices, such as a keyboard, a mouse, touchscreens, speech recognition, video camera's etc, all adapted to detect user actions with respect to the application running on the server, and to provide these inputs to the communication and processing unit COMPROC. The latter is further adapted to translate them, if necessary into a format understandable by the server, and to provide them to the central server application over the network. This action information is respectively denoted "Client 1 actions for 3D APP" to "Client N actions for 3D APP" for Fig. 1a, and "Client 1 actions for 2D APP" to "Client N actions for 2D APP" for Fig. 1b respectively. These messages are transmitted to the application running engine within the server, resp denoted 3D APP, 2D APP for Figs. 1a-b. The latter application engine is then adapted to update successive scenes pertaining to the central video application, based on the application itself, and based upon the user generated inputs, if provided by the user. In case no user inputs are provided, the scenes are just updated based upon the application information itself. This can for instance the case in e.g. programs for flight simulation, where the scenes are updated, via e.g. changing scenery and weather, even in case a user does not provide inputs at these moments. Successive ones of these scenes thereby form an application image sequence or video. These are denoted 3D video, resp 2D video in Figs. 1a-b.

For 3D applications, each user has its own view on this virtual world depending on the 3D position that that particular user has in this virtual world and the direction this user watches in this virtual world. As these views can also change with time, this viewpoint related information is also transmitted from each client to the server. For 2D applications a user viewpoint may be a rotated, translated, scaled and cropped version of the total 2D scene. However in some very simple 2D applications there is no need to adapt the central 2D APP viewpoint to each client. For these embodiments the clients do not have to provide this information to the server.

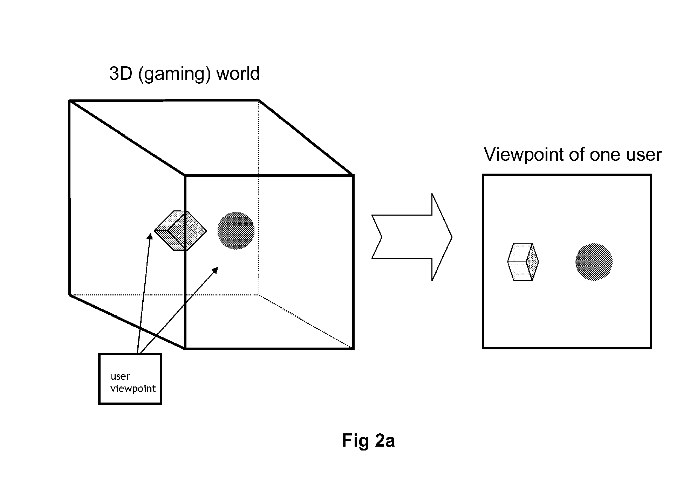

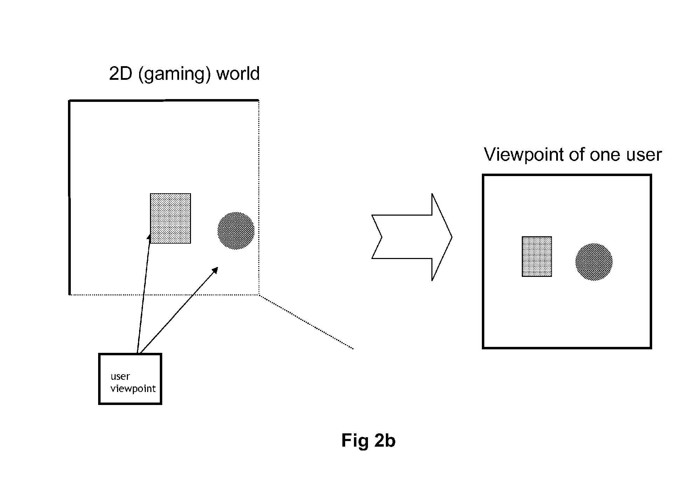

The process of generating such user-specific viewpoint from the central scene information is schematically explained in figs. 2a-b for 3D scenes and 2D scenes respectively.

In Figs 1a-b this user-related viewpoint information is denoted "CLIENT 1 viewpoint" to " CLIENT N viewpoint" and is transmitted from the communication and processing module, COMPROC within the respective clients to the server. This client related viewpoint information may comprise a viewing position in the 3D scene , e.g. expressed as the coordinates of a 3D point, a viewing direction e.g. expressed as the components of a 3D vector, a horizontal and vertical viewing angle e.g. expressed as a number of degrees and a tilt angle e.g. expressed as number of degrees, from which the server can generate the projection matrix. Alternatively a projection matrix maybe given .

Based on this client viewpoint information, the succession of the central scene information sequence may then be adapted to generate a succession of 2D user-related viewpoints for each user individually. This is performed within the server, in the embodiments of Fig. 1a-b by a 2D engine within the server. Typically this can be performed on a graphical acceleration unit, but other implementations may as well be possible. This 2D engine is thus adapted to derive a succession of 2D user-related viewpoints, for each user individually, such succession constituting a respective video stream for the respective user. In Figs. 1a-b the 2D engine therefore comprises dedicated user-related modules for performing this adaptation if necessary. However other embodiments exist without such a clear delineation into submodules.

The resulting sequences are respectively denoted 2Dvideo_1 to 2D video_N . These are subsequently to be encoded. In the prior art embodiment of Figs. 1a this is shown by a parallel processing by means of N separate encoder modules denoted ENC1 to ENCN. However in other embodiments only one encoder module may be present, for serially encoding the different user-viewpoint related 2D video streams. And in other embodiments combinations of both principles may be used.

In prior art situations such encoders may comprise traditional MPEG2 or H264 encoders. In general most of such standard encoders rely on motion-based prediction to achieve a compression gain. To this purpose motion vectors are calculated. This is mostly based on comparing image with a reference image, and determining how blocks within this particular image have changed or "moved" with respect to the reference image. To this purpose traditional block matching techniques may be used.

The encoded user-related views are denoted encoded 2D video 1 to encoded 2D video N and these are subsequently transmitted to the respective users. Upon receipt by the respective user, traditional decoders are adapted for rendering the video to their respective displays.

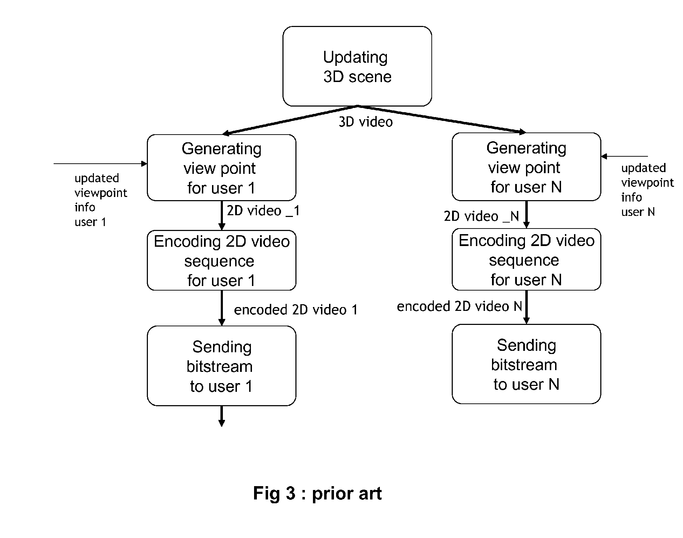

A summary of the prior art processing steps for central 3D generated application scenes is shown in Fig. 3.

As previously mentioned, traditional encoding requires a lot of processing effort. Since this has to be done for each user individually, this places a heavy burden on the central server.

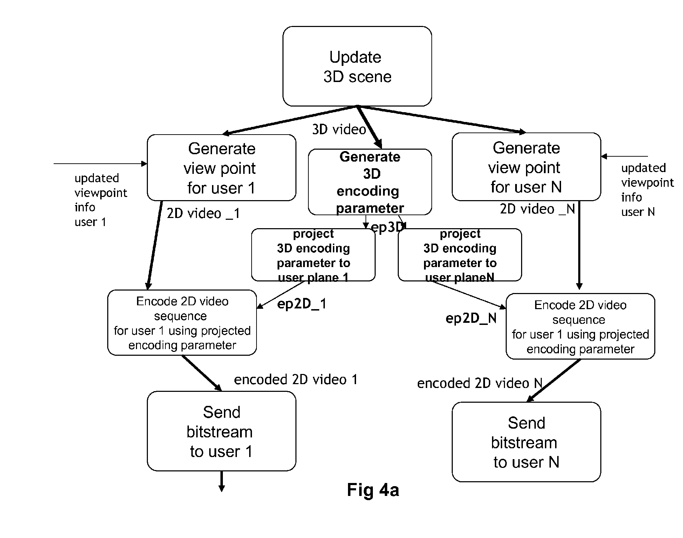

To solve these problems, embodiments of the invention take advantage of the information that is available in successive ones of the scenes pertaining to the central video application within the server. This is schematically shown for 3D applications in Fig. 4a. Since the application module within the server computer maintains the 3D virtual world, it knows where each object is located in the 3D virtual scene by means of vertex information of these objects. Therefore, it can easily infer encoding or compression related parameters from this 3D scene as well. Such encoding parameters may comprise motion vectors or predictions for block codes. The motion vectors can be obtained by first calculating the 3D motion vectors, e.g. by relating the vertices of an identified object of the scene at time t-1 with the same vertices of this object of the scene at time t. This will be followed by a projection step of the 3D motion vectors to the respective user plane to calculate the 2D motion vectors for this respective user video stream.

Predictions for block codes can be obtained by first calculating occlusion information, followed by a determination of the most appropriate coding mode such as intra- or intercoding. The occlusion itself may be determined during the process of projecting a 3D scene on a user's viewpoint, by using an intermediate z-buffer, with z representing the z-coordinate or depth coordinate in the 3D space seen from the user's viewpoint. The origin of this coordinate system can be placed in the users vantage point, with the positive z-axis lying or pointing to the user's viewing direction. This respective intermediate z-buffer expresses which vertices are closest to the user and hence which vertices are in the users vantage point and which other vertices are occluded. By using the aforementioned coordinate references vertices with a lowest z-buffer coordinate are visible, while other ones are occluded. By then comparing the z-buffer coordinates at time t to the ones at time t-1, it is known which vertices will become visible at time t and were occluded at time t-1. Projecting this set of vertices, being the occluded vertices that become visible, on the user's viewpoint plane gives the parts of the user's image that became visible from being occluded. This information then allows an encoder to discriminate which parts of the image become visible from being occluded, such that for these parts of the image there is no need to find a corresponding part in the (recent) previous images. For these parts, trying a predictive mode for the image blocks that lie in these regions which become visible at time t, and were visible not at time t-1, is a waste of computation time of an encoder. Consequently based upon this occlusion information, predictions for block modes can then comprise that those objects which only become visible at time t, and not at time t-1, should be encoded in intra mode, while objects which were visible at both times t-1 and t, can be predicted in inter-code mode.

Predictions for Block codes for 2D central server applications can as well be obtained by a first calculation of occlusion information. In this case this can be done by e.g. attributing to each object a variable indicating whether it belongs to the foreground or background. This further implies that objects belonging to the foreground are then to be drawn in the scaled or adapted 2D viewpoints such as to overwrite the background objects in case they overlap. The fact that a background object which previously was not visible from a user's perspective now becomes visible is then indicative of being previously occluded. An alternative way involves the use of again a virtual z-buffer, with artifial vantage point situated at coordinates (0,0,0) and viewing direction being the positive z-axis. The 2D objecten are supposed to be projected into the plane at z=1, such that foreground objects and their vertices will get a z-value of exactly 1, while objects at the background will be attributed a z-value of 1 + ε, with ε having a very small value e.g 1E-7 . In case an object will be placed before another object which will then become a background object, this other object will receive another z-value. By means of the aforementioned z-buffer mechanism, the background or non-visible information will then not be displayed in the user-adapted 2D viewpoint.

Fig. 4a shows that, for 3D applications, first a 3D encoding parameter, denoted ep3D, is derived from the 3D scenes, after which step these are again adapted to the appropriate user viewpoint, such as to obtain respective 2D encoding parameters for each user-related video sequence. By using these user-related encoding parameters as input during the subsequent encoding of the 2D video sequence, the encoding process is much simplified as the traditional process of e.g. block matching can now be omitted and for certain blocks not all possible modes have to be visited to determine the most efficient one in terms of compression gain.

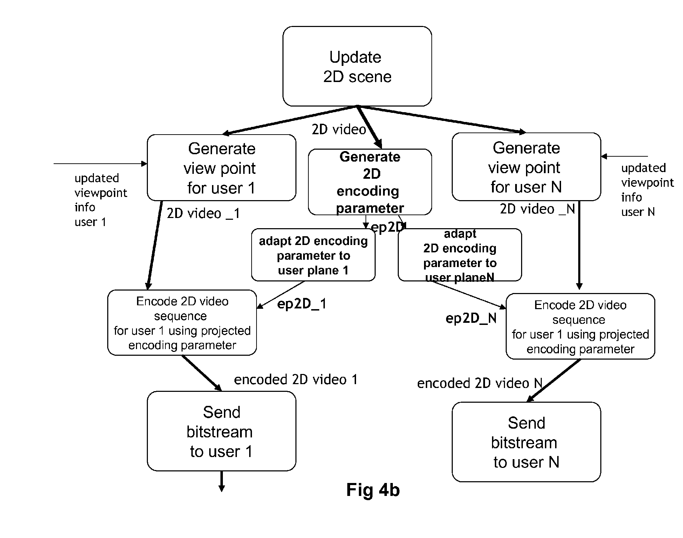

Fig. 4b shows a similar procedure but now for 2D central scenes. Again a central 2D motion vector can be obtained. This has to be adapted to the user-related plane. In this case there is no projection any more, only translation to image coordinates. This can consists e.g. of a planar scaling, rotation, translation and cropping.

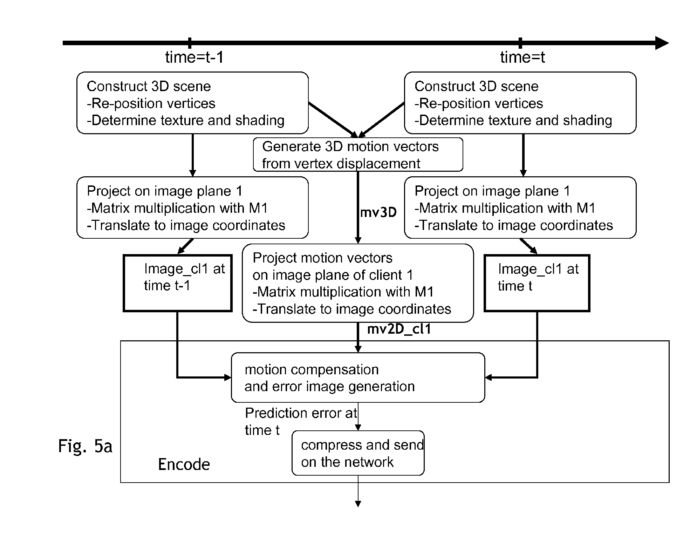

As previously mentioned such an encoding related parameter may comprise a motion vector. A more detailed embodiment showing the calculating of these motion vectors from the 3D scene information, for client user 1, is shown in Fig. 5a. Again in a first stage the 3D motion vectors are obtained from the displacement of the vertices pertaining to a particular object in the 3D space. In a next step he projection of these 3D motion vectors on the image plane associated with user1 gives a very good prediction for the motion vector field that the encoder needs for encoding the user1-related 2D video sequence. This projection can take place by means of a matrix multiplication with matrix M1, this matrix representing how the 3D coordinates are to be changed into specific user1-plane coordinates. This matrix can be part of the user viewpoint information, provided by the user, or can be derived therefrom. This matrix multiplication is as well used for deriving the respective viewpoints or projections for user 1, at time t and t-1, from the central 3D video scenes at these instances in time. The resulting images or user-related viewpoints for user 1 are denoted image_cl1 at time t-1 and image_cl1 at time t. These images are then provided to an encoder, together with the user1-motion vector. This avoids that the encoder needs to estimate the motion vector itself. It is known that estimating the motion vectors requires the most costly process in terms of computation power. Feeding the encoder with additional information that is extracted directly from the 3D world will make the task of the encoder simpler, hence it will need to spend fewer computation cycles for the encoding process and it will be faster or one processor will be able to support more flows.

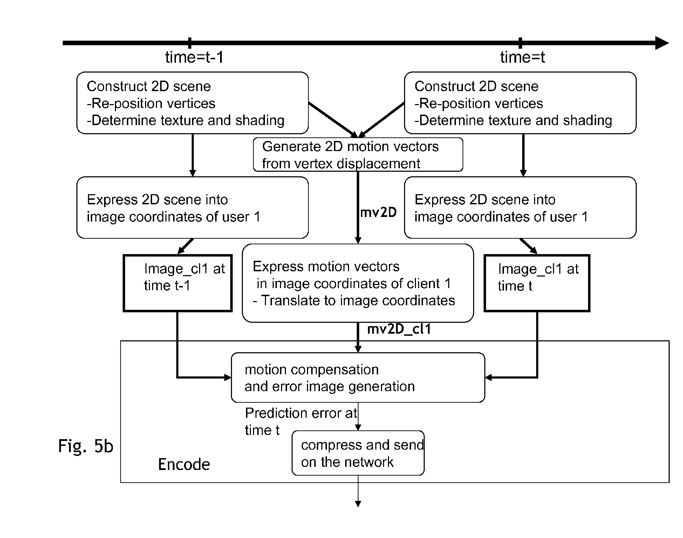

Fig. 5b shows similar steps for a 2D video application.

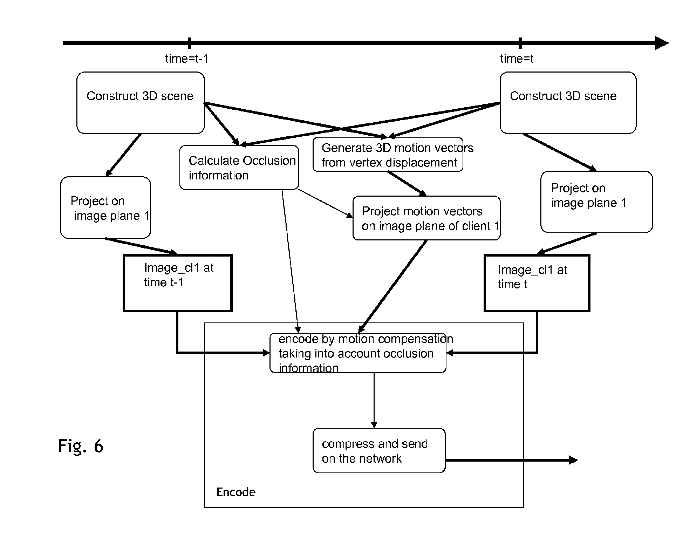

Fig. 6a shows an enhanced embodiment of the method of Fig. 5a, with the aim of taking into account some occlusion information. As previously mentioned, occlusion information relates to which parts/object of the 2D-user related viewpoints of a user contains now central 3D scene parts that were not visible in the image at time t-1, but which became visible at time t. As also previously mentioned these parts/objects are best encoded in intra mode as there are no corresponding blocks in the previous frame.

Since the server computer maintains the 3D virtual world and since it knows from which viewpoint each user is watching, it can easily infer which parts of the scene that were occluded become visible in the image to be encoded Providing this information to the encoder again avoids that the encoder needs to look for parts of the image that were occluded itself. For those parts the encoder knows upfront that it needs to encode these parts in intra-mode ,without having to run through all modes to determine just this. It normally takes the encoder a fair amount of computation power to decide which mode is the most efficient mode for each parts of the image ,in technical terms, for each macro block of the image block. In these embodiments the encoder is for a large part alleviated from this task based on the information it gets from the 3D scene.

In Fig. 6 this is shown by an additional module which is adapted to calculate the occlusion information, and which is further adapted to provide a control input parameter to the module adapted to project the motion vectors on the image plane of a client, as only these 3D motion vectors pertaining to objects which were visible at both instances in time t-1 and t, have to be projected and used. This occlusion information is also further provided to the encoder itself, which is then adapted to only encode in intercoding mode these same parts, whereas it needs to encode, in intramode, these parts that were occluded and now become visible.

For these occluded parts the encoder needs to send residual information , which is used by the decoder to reconstruct parts of the image that could not be accurately predicted. The residual information does not require a lot of bits to be encoded either. Since the occluded parts of the correction image cannot rely on previous images and have to rely on the pixel information in the image itself. Therefore these parts are referred to as "intra" coded parts, while parts of the image that can rely on previous images to be encoded are said to have been "inter" coded.

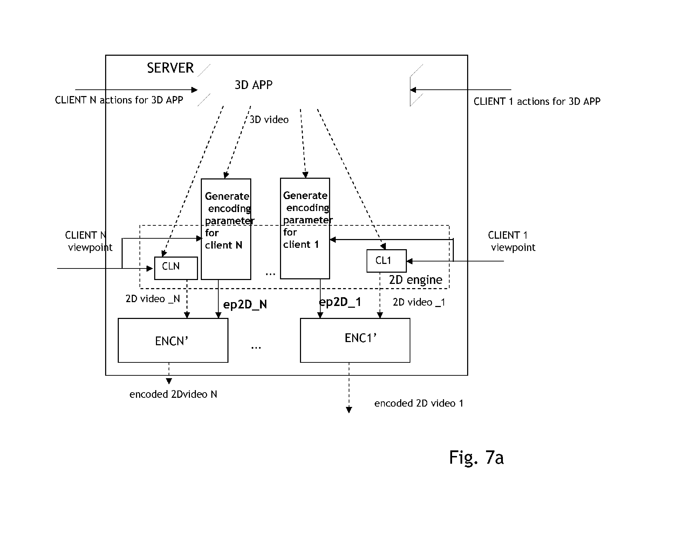

Fig 7a shows a server which is adapted to perform the aforementioned method. With respect to the prior art server depicted in Fig. 1a for central 3D applications, this embodiment therefore comprises means for calculating the respective compression related parameters, resp denoted ep2D_1 to ep2D_N for each user. These respective parameters are then provided to respective adapted encoders, denoted ENC1' to ENCN' . Such encoders are adapted to receive these parameters as well as the 2D video sequence to be encoded, and are described in the not yet published European Patent Application nr 09290985.2. As described therein such encoders are much simpler compared to standard encoders . The respective encoded video streams, denoted encoded 2Dvideo 1 to encoded 2D video N is then transmitted to the respective users.

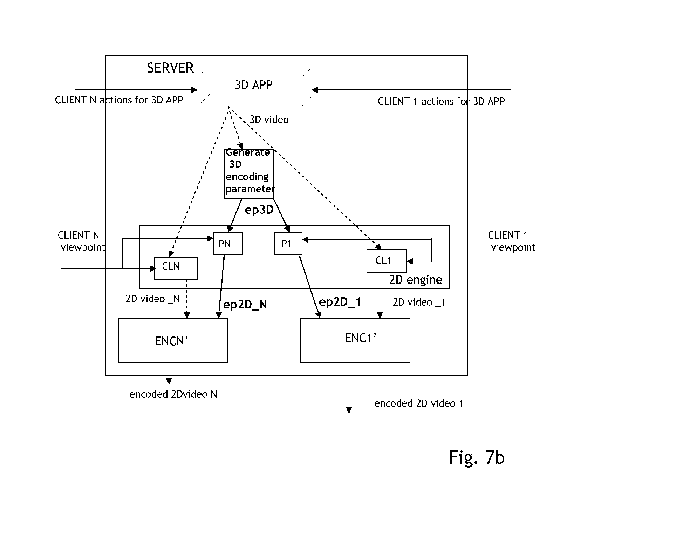

Fig. 7b shows a variant embodiment where the generation of the respective compression related parameters is performed as set out in Fig. 4a. This implies the generation of a general 3D compression or encoding parameter ep3D, which is then subsequently projected onto the respective 2D user planes, using the respective client user viewpoint information, such as to generate the respective user-related compression parameters ep2D_1 to ep2D_N. This projection is performed in respective devices denoted P1 to PN. However other embodiments are as well possible wherein all steps are performed by means of one central processor, thus without the need of specific devices for performing these steps.

While the principles of the invention have been described above in connection with specific apparatus, it is to be clearly understood that this description is made only by way of example and not as a limitation on the scope of the invention, as defined in the appended claims.

## Claims

1. Method for providing an encoded video application (3D APP; 2DAPP) from a server (SERVER) to a respective client (CLIENT1,...,CLIENTN) user via a communications link, said method comprising steps of updating scenes pertaining to said video application (3DAPP; 2DAPP) at said server (SERVER), deriving therefrom a respective video stream (2Dvideo1,...2DvideoN) comprising a succession of respective 2D user-related viewpoints for said respective client (CLIENT1,...,CLIENTN), calculating at least one respective compression related parameter (ep2D_1,...,ep2D_N) from application object vertex information extracted from a subset of successive ones of said scenes pertaining to said video application (3DAPP; 2DAPP) at said server, using said respective compression related parameter (ep2D_1,...,ep2D_N) during subsequent encoding of said respective video stream (2Dvideo1,...2DvideoN), for thereby generating a respective encoded video stream (encoded2D video_1,...,encoded2DvideoN) for provision to said respective client user (CLIENT1,...,CLIENTN).

2. Method according to claim 1 wherein said scenes pertaining to said video application at said server are updated from at least one information (CLIENT1 actions for 3D APP,..., CLIENTNactions for 3D APP; CLIENT1 actions for 2D APP,..., CLIENTNactions for 2D APP) received by said server and related to at least one client action for said application (3D APP; 2D APP) provided by said respective client.

3. Method according to claim 1 wherein said scenes pertaining to said video application at said server are updated from at least one information (CLIENT1 actions for 3D APP,..., CLIENTNactions for 3D APP; CLIENT1 actions for 2D APP,..., CLIENTNactions for 2D APP) received by said server and related to at least one client action for said application and provided by at least one other client coupled to said server via another communications link.

4. Method according to any of the previous claims 1-3 wherein said video application is a 2-dimensional video application (2D APP) and wherein said scenes are 2-dimensional scenes.

5. Method according to any of the previous claims 1-4 wherein said video application is a 3-dimensional video application (3D APP), whereby said scenes are 3-dimensional scenes and said respective 2-dimensional user-related viewpoints are obtained by projecting said 3-dimensional scenes onto a respective user-related plane relating taking into account respective user-related projection information (CLIENT1_viewpoint,...,CLIENTN_viewpoint).

6. Method according to any of the previous claims 1-5 wherein said at least one respective compression related parameter comprises at least one respective motion vector.

7. Method according to any of the previous claims 1-6 wherein said at least one respective compression related parameter comprise respective predictions for block modes.

8. Method according to any of the previous claim 6 wherein said at least one respective compression related parameter (ep2D_1,...,ep2D_N) is calculated from vertex displacement information from a same object part of said subset of successive ones of said scenes at said server.

9. Method according to claim 5 and 6 wherein said at least one respective motion vector is obtained by calculating a 3D motion vector from said subset of successive ones of said 3D scenes, followed by a step of projecting said 3D motion vector to said respective user-related plane.

10. Method according to any of the claims 1-9 wherein said scenes pertaining to said video application are updated at said server from previous scenes, and from respective user specific viewpoint related information (CLIENT1_viewpoint,...,CLIENTN_viewpoint) transmitted by said respective client user to said server (CLIENT1,...,CLIENTN).

11. Method according to claim 5 and 10 wherein said respective user specific viewpoint related information (CLIENT1_viewpoint, ..., CLIENTN_viewpoint) comprises information related to a display of said respective client user.

12. Method according to claim 6 and 10 wherein said respective user specific viewpoint related information comprises position, viewing direction, viewing angle and tilting angle information

13. Method according to any of the previous claims 1- 12 further comprising a step of calculating occlusion information for identifying which object of said subset of successive scenes is part of said succession of respective 2D user-related viewpoints.

14. Server for providing a video application (3D APP; 2DAPP) to a respective client (CLIENT1,...,CLIENTN) user coupled to said server via a communications link, said server being adapted to update scenes pertaining to said video application (3DAPP; 2DAPP), said server being further adapted to derive therefrom a respective video stream (2Dvideo1,...2DvideoN) comprising a succession of respective 2D user-related viewpoints for said respective client (CLIENT1,...,CLIENTN), to calculate at least one respective compression related parameter (ep2D_1,...,ep2D_N) from application object vertex information extracted from a subset of successive ones of said scenes pertaining to said video application (3DAPP; 2DAPP), to use said respective compression related parameter (ep2D_1,...,ep2D_N) during subsequent encoding of said respective video stream (2Dvideo1,...2DvideoN), for thereby generating a respective encoded video stream (encoded 2D video_1,...,encoded 2DvideoN) for provision to said respective client user (CLIENT1,...,CLIENTN).

15. Server according to claim 14 , being further adapted to perform the method in accordance to any of the claims 2-13.
